# FASCICULE DE BREVET EUROPEEN

(11) **EP 1 479 330 B1**
(45) Date de publication et mention de la délivrance du brevet: **21.12.2005**
(21) Numéro de dépôt: 04291271.7
(22) Date de dépôt: 18.05.2004
(51) Int. Cl.: A47J 37/06

(54) **Appareil électroménager comprenant deux plaques de cuisson à articulation décalée**
Haushaltsgerät mit zwei mittels eines versetzten Gelenks angelenkten Kochplatten
Household appliance with two offset articulated hot plates

(30) Priorité: 20.05.2003 FR 0306061
(43) Date de publication de la demande: 24.11.2004
(73) Titulaire: SEB S.A., 69130 Ecully (FR)
(72) Inventeur: Gruaz, Denis, 74370 Villaz (FR)
(74) Mandataire: Pichat, Thierry

(56) Documents cités:
- EP-A- 0 772 992
- DE-A- 3 821 494
- FR-A- 2 394 278
- FR-A- 2 783 689

## Description

La présente invention concerne un appareil électroménager comprenant deux plaques de cuisson articulées entre elles, du type gril-viande ou gaufrier.

On connaît des appareils électroménagers du type, comprenant deux sous-ensembles chauffants articulés entre eux entre une position fermée et une position ouverte, suivant leur côté arrière par une charnière comprenant, d'une part, un arbre de rotation qui est solidaire d'un premier sous-ensemble chauffant et qui est situé en avant du bord extrême arrière de la plaque inférieure de cuisson portée par le sous-ensemble chauffant inférieur, et, d'autre part, une gorge de guidage qui est solidaire du deuxième sous-ensemble chauffant et qui s'étend selon une direction sensiblement verticale, l'un des sous-ensembles chauffants comportant un élément d'appui monté glissant le long d'une rampe qui est solidaire de l'autre sous-ensemble chauffant et qui s'étend sensiblement de l'avant vers l'arrière de façon à entraîner le coulissement de l'arbre de rotation le long de la gorge de guidage pendant le mouvement relatif des sous-ensembles chauffants. Un tel appareil est, par exemple, décrit dans la demande de brevet DE 38 21 494 dans lequel le bord arrière de la plaque de cuisson supérieure est montée glissante le long de la plaque de cuisson inférieure.

Un inconvénient d'un tel appareil est que, les deux plaques de cuisson frottent l'une contre l'autre quand elles passent de l'une à l'autre de leur position. De ce fait, d'une part, la plaque supérieure de cuisson racle la plaque inférieure ce qui entraîne les jus et graisses de cuissons hors de l'appareil, et, d'autre part, la manipulation n'est pas agréable. Tout ceci oblige l'utilisateur à soulever la plaque supérieure de cuisson.

La solution apportée par la présente invention est un appareil du type précité, dans lequel l'élément d'appui et la rampe sont disposés par rapport aux plaques de cuisson de sorte que, quelle que soit la position relative des sous-ensembles chauffants, le bord extrême arrière de la plaque supérieure de cuisson portée par le sous-ensemble chauffant supérieur est en avant du bord extrême arrière de la plaque inférieure de cuisson et n'entre pas en contact avec cette plaque.

Ainsi, quelle que soit la position des deux sous-ensembles chauffants, les jus et graisses de cuisson se trouvant sur la plaque supérieure de cuisson glissent le long de cette dernière et coulent sur la plaque inférieure de cuisson qui sert de réceptacle des jus de cuisson provenant de la plaque supérieure de cuisson. En outre le sous-ensemble chauffant supérieur ne vient pas en contact avec ces jus et ne les entraîne pas hors du sous-ensemble chauffant inférieur, ce qui permet de garder propre les deux sous-ensembles chauffants.

On notera dans la présente description que la position "en avant" est définie, par rapport à un observateur situé du côté de l'ouverture de l'appareil, dans une direction se rapprochant de cet observateur, alors que la position "en arrière" est à contrario dans une direction s'éloignant de celui-ci ; la position "au moins à l'aplomb" désigne toute position située en avant de la référence considérée, depuis et y compris l'aplomb à celle-ci, et "au plus à l'aplomb" toute position située en arrière à celle-ci de la référence considérée, depuis et y compris l'aplomb

D'autres particularités et avantages de la présente invention apparaîtront dans la description détaillée des dessins annexés dans lesquelles est illustré un mode de réalisation donné à titre d'exemple non limitatif.
- la figure 1 est une vue partielle en perspective d'un gril-viande dont les deux plaques de cuisson sont en position ouverte ;
- la figure 2 est une vue en coupe perpendiculairement à l'axe de la charnière, les deux plaques de cuisson étant en position fermée ; et
- la figure 3 est une vue semblable à la figure 2, les deux plaques de cuisson étant en cours d'ouverture ;
- la figure 4 est une vue semblable à la figure 2, les deux plaques de cuisson étant en position ouverte ;
- la figure 5 est une vue en perspective d'un sous ensemble supérieur d'un gril-viande conforme à la présente invention ; et
- la figure 6 est une vue en perspective d'un sous ensemble inférieur d'un gril-viande conforme à la présente invention.

Un appareil électroménager 1 du type gril-viande comprend un sous-ensemble chauffant inférieur 2 et un sous-ensemble chauffant supérieur 3 articulé au sous-ensemble chauffant inférieure 2 par une charnière 4.

De façon connue, le sous-ensemble chauffant inférieur 2 comprend une coquille inférieure 5 formant le corps principal du sous-ensemble chauffant, une plaque inférieure de cuisson 6 solidaire de la coquille inférieure 5 et adaptée à recevoir l'aliment à cuire, et une résistance électrique de chauffe adaptée à chauffer la plaque inférieure de cuisson 6. De même, le sous-ensemble chauffant supérieur 3 comprend une coquille supérieure 7, une plaque supérieure de cuisson 8 et une résistance électrique de chauffe.

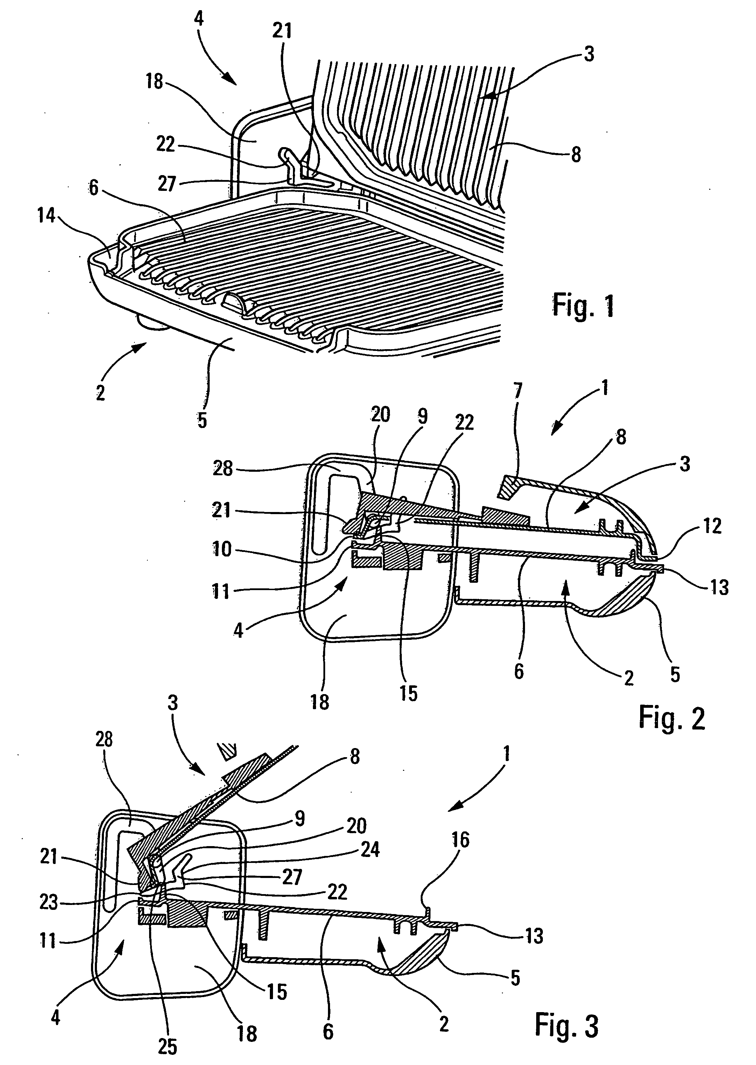

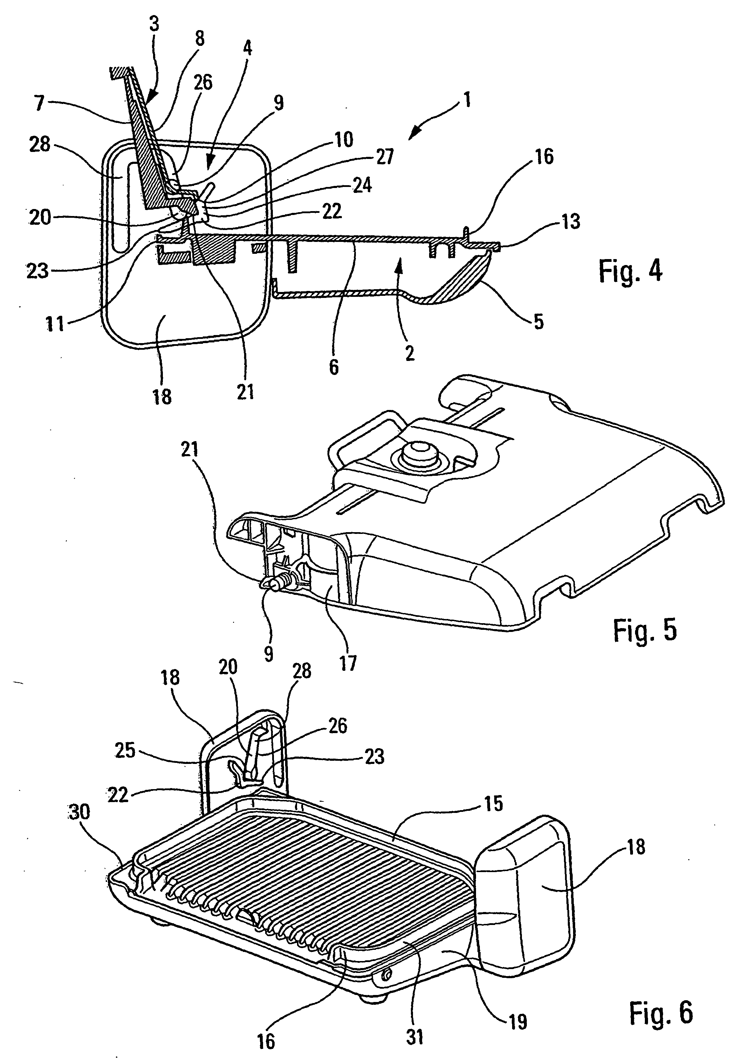

Les deux sous-ensembles chauffants 2,3 sont articulés entre eux par la charnière 4 par leur côté arrière, et ils sont mobiles entre une position fermée dans laquelle les deux plaques de cuisson 5,6 sont sensiblement parallèles (figure 2), et une position ouverte dans laquelle ces dernières forment un angle au moins supérieur à 60° afin de permettre à l'utilisateur de prendre la nourriture sans se brûler. L'angle d'ouverture peut être, de préférence, sensiblement égal ou supérieur à 90° (figure 4).

La charnière 4 comprend un arbre de rotation 9 qui est solidaire d'une première plaque de cuisson, en l'occurrence de la plaque supérieure de cuisson 8.

Comme on peut le voir à la figure 2, quand les deux plaques de cuisson 6,8 sont en position fermée, c'est à dire dans la position de cuisson par gril, le bord extrême arrière 10 de la plaque supérieure de cuisson 8 est au moins à l'aplomb du bord extrême arrière 11 de la plaque inférieure de cuisson 6, et de préférence en avant.

Par ailleurs, dans le présent mode de réalisation, les plaques inférieure et supérieure de cuisson 6,8 sont orientées légèrement inclinées vers l'avant afin de permettre l'écoulement des jus dans un réceptacle disposé en avant et sous la plaque inférieure de cuisson 6. Afin d'empêcher l'écoulement des jus de cuisson le long de la plaque supérieure de cuisson 8 au delà du bord extrême avant 13 de la plaque inférieure de cuisson 6 quand les deux plaques sont en position fermée, le bord extrême avant 12 de la plaque supérieure de cuisson 8 est au plus à l'aplomb du bord extrême avant 13 de la plaque inférieure de cuisson 6 et de préférence en arrière. Ainsi, quand les plaques de cuisson 6,8 sont en position fermée, l'intégralité de la plaque supérieure de cuisson 8 se trouve disposée au-dessus de la plaque inférieure de cuisson 6.

L'arbre de rotation 9 est situé en avant du bord extrême arrière 11 de la plaque inférieure de cuisson 6. Ainsi, lors de l'ouverture de la plaque supérieure de cuisson 8, le bord extrême arrière 10 de la plaque supérieure de cuisson 8 est entraînée encore plus en avant du bord extrême arrière 11 de la plaque inférieure de cuisson 6.

Par ailleurs, dans le présent exemple, le bord extrême avant 12 de la plaque supérieure de cuisson 8 est entraînée encore plus en arrière du bord extrême avant 13 de la plaque inférieure de cuisson 6. Dans le présent exemple, l'arbre de rotation 9 est situé au-dessus de l'extrémité arrière 10 de la plaque supérieure de cuisson 8.

De plus, comme l'arbre de rotation 9 est disposé à proximité et en avant du bord extrême arrière 10 de la plaque supérieure de cuisson 8, quand la plaque supérieure de cuisson 8 en position ouverte fait un angle légèrement supérieure à 90° avec la plaque inférieure de cuisson 6, le bord extrême arrière 10 de la plaque supérieure de cuisson 8 est en avant de l'arbre de rotation 9.

Dans le présent exemple, les bords extrêmes arrière 10 et avant 12 de la plaque supérieure de cuisson 8 sont formés par les rebords arrière et avant délimitant la surface de cuisson adaptée à recevoir la nourriture à cuire.

Dans la plaque inférieure de cuisson 6, la surface de cuisson est légèrement réduite par un rebord arrière 15 et des rebords latéraux 31. La zone située entre les bords extrêmes arrière 11 et latéraux 30 et les rebords arrière 15 et latéraux 31 définit une rigole 14 de réception des jus. La plaque inférieure de cuisson 6 comprend également à proximité des rebords latéraux 31, à leur extrémité avant, un rebord avant 16.

Quand les deux plaques de cuisson 6,8 sont en position fermée, le bord extrême arrière 10 de la plaque supérieure de cuisson 8 est située en arrière du rebord arrière 15 de la plaque inférieure de cuisson 6, et le bord extrême avant 12 de la plaque supérieure de cuisson 8 est située en avant du rebord avant 16 de la plaque inférieure de cuisson 6.

Dans le présent exemple, l'arbre de rotation 9 est formée de deux tiges 9 qui s'étendent selon l'axe de la charnière, hors des parois latérales 17 de la coquille à laquelle est fixée la première plaque de cuisson, en l'occurrence, la coquille supérieure 7. Chaque tige 9 est engagée de façon pivotante dans une plaque d'articulation 18 qui est solidarisée aux parois latérales 19 de la coquille à laquelle est fixée la deuxième plaque de cuisson, en l'occurrence, la coquille inférieure 5.

L'arbre de rotation 9 est adapté à coulisser le long d'une gorge de guidage 20 qui est solidaire de la deuxième plaque de cuisson. En l'occurrence, chaque tige 9 est adaptée à coulisser le long d'une gorge de guidage 20 correspondante réalisée dans une plaque d'articulation 18, chaque gorge de guidage 20 s'étendant selon une direction sensiblement perpendiculaire à l'axe de la charnière 4 et aux plaques de cuisson 6,8 en position fermée, c'est à dire selon une direction sensiblement verticale, de sorte que, quand la plaque supérieure de cuisson 8 passe de l'une à l'autre de ses positions, son bord extrême arrière 10 est toujours en avant de l'extrémité arrière 11 de la plaque inférieure de cuisson 6.

En outre, un élément d'appui 21 solidaire d'une des plaques de cuisson est adapté à glisser le long d'une rampe 22 solidaire de l'autre plaque de cuisson de manière à entraîner le coulissement de l'arbre de rotation 9 le long de la gorge de guidage 20 pendant le mouvement relatif des plaques de cuisson 6,8 autour de l'arbre de rotation 9.

Dans le présent exemple, l'élément d'appui 21 est solidaire de la plaque de cuisson à laquelle est solidarisé l'arbre de rotation 9 (la plaque supérieure de cuisson 8), et, la rampe 22 est solidaire de la plaque de cuisson à laquelle est solidarisée la gorge de guidage 20 (la plaque inférieure de cuisson 6) et s'étend selon une direction longitudinale qui est sensiblement perpendiculaire à l'axe de la charnière 4 et à la direction d'élévation, c'est à dire de l'avant vers l'arrière.

Le sous-ensemble chauffant supérieur 3 comprend deux éléments d'appui 21 qui sont adjacents au bord extrême arrière 10 de la plaque supérieure de cuisson 8, et qui font saillie hors des parois latérales 17 de la coquille supérieure 7.

Chaque plaque d'articulation 18 comprend une rampe 22 qui est située au-dessus de la plaque inférieure de cuisson 6. Chaque gorge de guidage 20 est disposée au dessus de la rampe 22 correspondante. La limite arrière 23 de chaque rampe 22 est située en arrière du rebord arrière 15 de la plaque inférieure de cuisson 6, et sa limite avant 24 est située en avant du rebord arrière 15. De cette façon, quand le bord extrême arrière 10 de la plaque supérieure de cuisson 8 est à proximité du rebord arrière 15 de la plaque inférieure de cuisson 6, la plaque supérieure de cuisson 8 est soulevée.

Par ailleurs, chaque gorge de guidage 20 s'étend légèrement dans la direction longitudinale, vers l'arrière, de sorte que son extrémité inférieure 25 est située en avant de son extrémité supérieure 26. Chaque rampe 22 s'étend légèrement selon la direction d'élévation de sorte que sa limite arrière 23 est situé au-dessous de sa limite avant 24. Dans le présent exemple, chaque gorge de guidage 20 est orienté sensiblement perpendiculairement à la rampe 22 correspondante.

Dans le présent exemple, le coulissement vers le haut de la plaque supérieure de cuisson 8 permet au bord extrême arrière 10 de la plaque supérieure de cuisson 8 de passer au-dessus du rebord arrière 15 de la plaque inférieure de cuisson 6, de sorte qu'en position ouverte les jus de cuisson coulent directement dans la zone de cuisson de la plaque inférieure de cuisson.

Par ailleurs, l'extrémité avant 25 de la gorge de guidage 20 est située en arrière de la limite avant 24 de la rampe 22, et l'extrémité arrière 26 de la gorge de guidage 20 est située en avant de la limite arrière 23 de la rampe 22.

De plus, la limite avant 24 de la rampe 22 comprend une butée 27 qui est adaptée à stabiliser la plaque supérieure de cuisson 8 quand elle est en position ouverte et à l'empêcher de continuer son ouverture au-delà de cette position.

Selon l'appareil du présent mode de réalisation, quand les plaques de cuisson sont en position fermée, le bord extrême arrière de la plaque supérieure de cuisson se trouve sur la plaque inférieure de cuisson ; lors de l'ouverture de la plaque supérieure de cuisson le bord extrême arrière de celle-ci bascule vers l'avant et est dirigé encore plus en avant par rapport au bord extrême arrière de la plaque inférieure de cuisson ; et quand l'appareil est ouvert, les jus de cuisson coulent de la plaque supérieure de cuisson directement sur la plaque inférieure de cuisson, le bord extrême arrière de la plaque supérieure de cuisson se trouvant au-dessus de la plaque inférieure de cuisson. De ce fait, la plaque inférieure de cuisson sert de réceptacle des jus de cuisson provenant de la plaque supérieure de cuisson, et seules les deux plaques de cuisson sont salies par les graisses et jus de cuisson.

Dans le présent mode de réalisation, la gorge de guidage 20, au-delà de son extrémité supérieure 26, est prolongée par une gorge supplémentaire 28 dont la forme en U inversé permet à la plaque supérieure de cuisson 8 de pouvoir être ouverte à 180° par rapport à la plaque inférieure de cuisson 6. L'utilisateur doit alors faire coulisser l'arbre de rotation 9 dans cette gorge supplémentaire 28, l'élément d'entraînement 21 et la rampe 22 n'étant pas conformés, dans le présent exemple, pour réaliser ce coulissement.

Bien évidemment, la présente invention n'est pas limitée au mode de réalisation illustré par les figures, et de nombreuses modifications peuvent y être apportées dans le cadre des revendications.

Il serait ainsi possible que l'arbre de rotation soit solidaire de la plaque inférieure de cuisson. Il serait aussi possible que la rampe d'appui soit solidaire de la plaque supérieure de cuisson.

## Revendications

1. Appareil électroménager (1) comprenant deux sous-ensembles chauffants (2,3) articulés entre eux entre une position fermée et une position ouverte, suivant leur côté arrière par une charnière (4) comprenant, d'une part, un arbre de rotation (9) qui est solidaire d'un premier sous-ensemble chauffant (3) et qui est situé en avant du bord extrême arrière (11) de la plaque inférieure de cuisson (6) portée par le sous-ensemble chauffant inférieur (2), et, d'autre part, une gorge de guidage (20) qui est solidaire du deuxième sous-ensemble chauffant (2) et qui s'étend selon une direction sensiblement verticale, l'un des sous-ensembles chauffants (3) comportant un élément d'appui (21) monté glissant le long d'une rampe (22) qui est solidaire de l'autre sous-ensemble chauffant (2) et qui s'étend sensiblement de l'avant vers l'arrière de façon à entraîner le coulissement de l'arbre de rotation (9) le long de la gorge de guidage (20) pendant le mouvement relatif des sous-ensembles chauffants (2,3), **caractérisé en ce que** l'élément d'appui (21) et la rampe (22) sont disposés par rapport aux plaques de cuisson (6,8) de sorte que, quelle que soit la position relative des sous-ensembles chauffants (2,3), le bord extrême arrière (10) de la plaque supérieure de cuisson (8) portée par le sous-ensemble chauffant supérieur (3) est en avant du bord extrême arrière (11) de la plaque inférieure de cuisson (6) et n'entre pas en contact avec cette plaque (6).

2. Appareil électroménager (1) selon la revendication 1, **caractérisé en ce que**, quand les plaques de cuisson (6,8) sont en position fermée, le bord extrême avant (12) de la plaque supérieure de cuisson (8) est au plus à l'aplomb du bord extrême avant (13) de la plaque inférieure de cuisson (6).

3. Appareil électroménager (1) selon la revendication 1 ou 2, **caractérisé en ce que** l'arbre de rotation (9) est solidaire de la plaque supérieure de cuisson (8).

4. Appareil électroménager (1) selon l'une des revendications 1 à 3, **caractérisé en ce que** l'élément d'appui (21) est solidaire de la plaque supérieure de cuisson (8) et est adjacent de son bord extrême arrière (10).

5. Appareil électroménager (1) selon l'une des revendications 1 à 4, **caractérisé en ce que** la gorge de guidage (20) s'étend légèrement vers l'arrière de telle sorte que son extrémité inférieure (25) est située en avant de son extrémité supérieure (26).

6. Appareil électroménager (1) selon l'une des revendications 1 à 5, **caractérisé en ce que** la rampe (22) s'étend légèrement selon la direction verticale, sa limite arrière (23) étant située au-dessous de sa limite avant (24).

7. Appareil électroménager (1) selon l'une des revendications 1 à 6, **caractérisé en ce que** la limite avant (24) de la rampe (22) comprend une butée (27) adaptée à stabiliser la plaque supérieure de cuisson (8) en position ouverte.

8. Appareil électroménager (1) selon l'une des revendications 1 à 7, **caractérisé en ce que** la gorge de guidage (20) est conformée de façon à ce que le bord extrême arrière (10) de la plaque supérieure de cuisson (8) passe au-dessus d'un rebord arrière (15) délimitant la surface de cuisson de la plaque inférieure de cuisson (6) pendant le mouvement relatif des plaques de cuisson (6,8).

9. Appareil électroménager (1) la revendication 8, **caractérisé en ce que** les limites arrière (23) et avant (24) de la rampe (22) sont situées, respectivement, en arrière et en avant du rebord arrière (15) de la plaque inférieure de cuisson (6) .

## Patentansprüche

1. Elektrogerät (1), umfassend zwei heizbare Untereinheiten (2,3), die zwischen einer geschlossenen Position und einer offenen Position miteinander verbunden sind, wobei ihrer Rückseite ein Scharnier (4) folgt, welches einerseits eine Rotationsachse (9) umfasst, die mit einer ersten heizbaren Untereinheit (3) verbunden ist und sich vor einem äußersten hinteren Rand (11) der unteren Kochplatte (6) befindet, die durch die untere (2) heizbare Untereinheit getragen wird, und andererseits eine Führungsrille (20), die mit der zweiten heizbaren Untereinheit (2) verbunden ist und sich entlang einer deutlich vertikalen Richtung erstreckt, wobei eine der heizbaren Untereinheiten (3) eine Stützeinheit (21) umfasst, die gleitend entlang einer Rampe (22) befestigt ist, die mit der anderen heizbaren Untereinheit (2) verbunden ist und sich deutlich von vorne nach hinten derart erstreckt, um die Schiene der Rotationsachse (9) entlang der Führungsrille (20) während der relativen Bewegung der heizbaren Untereinheiten (2, 3) anzutreiben, **dadurch gekennzeichnet, dass** die Stützeinheit (21) und die Rampe (22) im Vergleich zu den Kochplatten (6, 8) derart angeordnet sind, wie es die relative Position der heizbaren Untereinheiten (2, 3) ist, wobei der äußerste hintere Rand (10) der oberen Kochplatte (8), die durch die obere heizbare Untereinheit (3) getragen wird, sich vor dem äußersten hinteren Rand (11) der unteren Kochplatte (6) befindet und nicht in Kontakt mit dieser Platte (6) steht.

2. Elektrogerät (1) gemäß Anspruch 1, **dadurch gekennzeichnet, dass**, wenn sich die Kochplatten (6, 8) in einer geschlossenen Position befinden, sich der äußerste vordere Rand (12) der oberen Kochplatte (8) am meisten an der Lotgerade des äußersten vorderen Randes (13) der unteren Kochplatte (6) befindet.

3. Elektrogerät (1) gemäß Anspruch 1 oder 2, **dadurch gekennzeichnet, dass** die Rotationsachse (9) mit der oberen Kochplatte (8) verbunden ist.

4. Elektrogerät (1) gemäß einem der Ansprüche 1 bis 3, **dadurch gekennzeichnet, dass** die Stützeinheit (21) mit der oberen Kochplatte (8) verbunden ist und benachbart zu ihrem äußersten hinteren Rand (10) ist.

5. Elektrogerät (1) gemäß einem der Ansprüche 1 bis 4, **dadurch gekennzeichnet, dass** sich die Führungsrille (20) leicht derart nach hinten erstreckt, dass sich ihr unteres Ende (25) vor ihrem oberen Ende (26) befindet.

6. Elektrogerät (1) gemäß einem der Ansprüche 1 bis 5, **dadurch gekennzeichnet, dass** sich die Rampe (22) leicht entlang der vertikalen Richtung erstreckt, wobei sich ihre hintere (23) Begrenzung unter ihrer vorderen (24) Begrenzung befindet.

7. Elektrogerät (1) gemäß einem der Ansprüche 1 bis 6, **dadurch gekennzeichnet, dass** seine vordere (24) Begrenzung der Rampe (22) einen Begrenzer (27) umfasst, der eingerichtet ist, um die obere Kochplatte (8) in offener Position zu stabilisieren.

8. Elektrogerät (1) gemäß einem der Ansprüche 1 bis 7, **dadurch gekennzeichnet, dass** die Führungsrille (20) derart angepasst ist, dass ihr äußerster hinterer Rand (10) der oberen Kochplatte (8) über einen hinteren (15) Rand verläuft, der die Kochfläche von der unteren Kochplatte (6) während der relativen Bewegung der Kochplatten (6, 8) abgrenzt.

9. Elektrogerät (1) gemäß Anspruche 8, **dadurch gekennzeichnet, dass** sich die hintere (23) und vordere (24) Begrenzung der Rampe (22) jeweils hinter und vor dem hinteren Rand (15) der unteren Kochplatte (6) befindet.

## Claims

1. Electrical household appliance (1) comprising two heating sub-assemblies (2, 3) hinged between them between a closed position and an open position, depending on their rear positions by a hinge (4) comprising, on one hand, a rotation shaft (9) which is integral with a first heating sub-assembly (3) and which is located in front of the extreme rear edge (11) of the lower heating plate (6), carried by the lower heating sub-assembly (2), and, on the other hand, a guide groove (2) which is integral with the second heating sub-assembly (2) and which extends in a virtually vertical direction, one of the heat sub-assemblies (3) comprising a support element (21) assembled to slide along a ramp (22) which is integral with the other heating sub-assembly (2) and which extends virtually from the front to the back to bring about the sliding of the rotation shaft (9) along the guide groove (20) during the relative movement of the heating sub-assemblies (2, 3), **characterised by** the fact that the support element (21) and the ramp (22) are located in relation to the heating plates (6, 8) such that, whatever the relative position of the heating sub-assemblies (2, 3), the extreme rear edge (10) of the upper cooking plate (8) carried by the upper heating sub-assembly (3) is in front of the extreme rear edge (11) of the lower cooking plate (6) and does not come into contact with this plate (6).

2. Electrical household appliance (1) according to claim 1 **characterised by** the fact that, when the cooking plates (6, 8) are in a closed position, the extreme front edge (12) of the upper cooking plate (8) is at least plumb with the extreme front edge (13) of the lower cooking plate (6).

3. Electrical household appliance (1) according to claim 1 or 2 **characterised by** the fact that the rotation shaft (9) is integral with the upper cooking plate (8).

4. Electrical household appliance (1) according to one of claims 1 to 3 **characterised by** the fact that, the support element (21) is integral with the upper cooking plate (8) and is adjacent to its extreme rear edge (10).

5. Electrical household appliance (1) according to one of claims 1 to 4 **characterised by** the fact that the guide groove (2) extends slightly towards the rear such that its lower extremity (25) is located in front of its upper extremity (26).

6. Electrical household appliance (1) according to one of claims 1 to 5 **characterised by** the fact that the ramp (22) extends slightly in a vertical direction, its rear limit (23) being located below its front limit (24).

7. Electrical household appliance (1) according to one of claims 1 to 6 **characterised by** the fact that the front limit (24) of the ramp (22) comprises a stopper (27) adapted to stabilise the upper cooking plate (8) in an open position.

8. Electrical household appliance (1) according to one of claims I to 7 **characterised by** the fact that the guide groove (2) conforms such that the extreme rear edge (10) of the upper cooking plate (8) goes above the rear edge (15) marking out the cooking surface of the lower cooking plate (6) during the relative movement of the cooking plates (6, 8).

9. Electrical household appliance (1) according to claim 8 **characterised by** the fact that the rear (23) and front (24) limits of the ramp (22) are located, respectively, behind and in front of the rear edge (15) of the lower cooking plate (6).
